# FASCICULE DE BREVET EUROPEEN

(11) **EP 1 376 410 B1**
(45) Date de publication et mention de la délivrance du brevet: **16.03.2011**
(21) Numéro de dépôt: 03291496.2
(22) Date de dépôt: 19.06.2003
(51) Int. Cl.: G06F 17/30, H04L 29/06

(54) **Procédé de gestion d'informations de contexte par serveur intermédiaire**
Verfahren zur Verwaltung von Kontextinformationen in einem Zwischenserver
Method of managing context information by an intermediary server

(30) Priorité: 20.06.2002 FR 0207658
(43) Date de publication de la demande: 02.01.2004
(73) Titulaire: Société Française du Radiotéléphone-SFR, 75008 Paris (FR)
(72) Inventeur: Bensimon, Michael, 38100 Grenoble (FR)
(74) Mandataire: Debay, Yves

(56) Documents cités:
- WO-A-01/76164
- WO-A-99/64967

## Description

La présente invention concerne un procédé de gestion d'informations de contexte client ou session, liées à la fourniture d'un service, ou contenu, à travers un réseau informatique tel que l'Internet. Ces informations peuvent en particulier être mémorisées sous la forme de données dites mouchards ou « cookies », mémorisées en dehors du système informatique du fournisseur de contenu et à sa demande. Ces «cookies» peuvent en particulier être compatibles avec le protocole HTTP de l'Internet, ou avec des modes de connexion par téléphone mobile utilisant un protocole de type Voice Gateway ou VoiceXML ou WAP (pour « Wireless Application Protocol ») ou SMS (pour « Short Message Service »).

De plus en plus d'organismes utilisent un système informatique pour proposer à distance leurs services à des clients nombreux et variés, à travers un ou plusieurs réseaux informatiques comme l'Internet par exemple. Du point de vue des différents intervenants dans la gestion du réseau et des communications, un tel organisme est également appelé fournisseur de contenu. Quelle que soit la nature de ce contenu, consultation d'informations, achat ou vente de biens ou services, transmission de fichiers de données, il est souvent intéressant pour le fournisseur de contenu de conserver des informations sur le contexte de fourniture de son service à chaque client, sur ses précédentes interactions avec ce fournisseur ou avec d'autres, ou sur ses habitudes de comportement dans son utilisation des réseaux informatiques.

Du point de vue du serveur fournisseur de contenu, il est difficile ou impossible de reconnaître un même utilisateur d'une session à l'autre, car son adresse IP est susceptible de changer d'une fois à l'autre. Pour reconnaître plus facilement chaque client, et éviter de stocker sur le système informatique du serveur du site de telles informations de contexte relatives à chaque client, les logiciels utilisés pour réaliser un serveur de fourniture de contenu à de nombreux clients ont souvent la capacité d'envoyer au système informatique de chacun de ces clients un certain nombre de données de contexte, par exemple des données appelées mouchards ou « cookies ». De plus, au sein d'une même session avec le même utilisateur et le même terminal client, le protocole HTTP ne permet pas non plus de conserver un contexte spécifique à cette session applicative entre deux requêtes de l'utilisateur. Le même type de données de contexte est alors utilisé sous la forme de « cookies de session », souvent d'une durée de vie particulièrement brève, par exemple 15 mn. Cette appellation «cookie», d'origine anglo-saxonne, fait probablement référence au type de biscuits du même nom, où certains ingrédients sont incorporés sous la forme de petits morceaux.

Un «cookie» est une courte chaîne de caractères mémorisée par un serveur HTTP dans un fichier de l'ordinateur client, ou d'une passerelle que le client utilise. Les «cookies» sont utilisés pour maintenir un contexte correspondant à la session, ou au client, entre un serveur HTTP et un client connecté. Le mécanisme souvent utilisé consiste à stocker dans le «cookie» un identifiant temporaire, souvent crypté, qui identifie la session applicative et est appelé « cookie de session », ou un identifiant appellé « cookie client » d'une plus longue durée de vie, par exemple un an, qui identifie le client en lui-même. D'autres informations permanentes ou temporaires contenues dans ces «cookies» peuvent être en particulier la date et l'heure de l'accès du client au site du fournisseur, un compteur, une réponse à un questionnaire rempli lors de cette visite, une information personnelle relative au client et recueillie par le serveur du site ou l'un des serveurs participant à la communication, par exemple une adresse IP ou un numéro de série de processeur identifiant une machine. L'utilisation d'un compteur est une application courante du «cookie». Chaque visite à une page web incrémente la valeur d'un «cookie» lié à cette page. En associant ce compteur à la date et l'heure de visite, il est possible de mesurer la fréquence des visites et d'en déduire les habitudes de consultation.

Ces «cookies», ou données de contexte, sont mémorisés dans le système informatique du client, à la demande du système du fournisseur et par le logiciel de navigation utilisé par ce client pour consulter le site du fournisseur de contenu, par exemple un site web utilisant le protocole HTTP (pour « Hyper Text Transfer Protocol »). Ces données de contexte sont stockées sans intervention de l'utilisateur sur le système client, et sont automatiquement retransmises au site du même fournisseur de contenu ou d'un autre, lors d'une consultation ou d'une connexion ultérieure. De telles données de contexte peuvent être utilisées par exemple pour tenir à jour un maximum de dépenses autorisées à un client pour un même site marchand ou un même groupe de sites marchands, pour présenter au client des bannières publicitaires choisies en fonction des sites qu'il a visités précédemment, ou pour tenir le compte du nombre de visiteurs différents consultant un site déterminé en identifiant chacun de ces visiteurs.

Il est connu ainsi, par le document WO 01/76164, un système de fourniture en temps réel d'un flux audio en provenance d'internet à un téléphone mobile en mode WAP, qui requiert un équipement proxy audio pouvant récupérer des cookies d'un client WAP ou d'une passerelle WAP. Il est également connu, par le document WO 99/64967, une méthodes de transmission de cookies par un serveur proxy interposé entre un terminal utilisateur et un serveur distant. Le serveur proxy intercepte les cookies envoyés par le serveur au client et mémorise ces cookies de façon à libérer la mémoire du terminal utilisateur.

De telles données ne peuvent toutefois pas toujours permettre de retrouver le contexte accompagnant chaque client, en particulier lorsqu'il change d'ordinateur d'une consultation à l'autre, par exemple en passant d'un ordinateur de bureau à un ordinateur portable. En effet, même s'il fournit des informations communes, comme un même nom d'identification, la connexion d'un même utilisateur client par deux ordinateurs différents ne retrouvera pas des données de contexte communes auprès du système d'un fournisseur de contenu en se basant sur le seul système des «cookies» selon le protocole HTTP.

Un but de l'invention est de permettre à un tel système informatique fournisseur de contenu de retrouver des données de contexte, par exemple des «cookies» de session ou des «cookies» clients, correspondant à un utilisateur client déterminé ou à une session déterminée, sans avoir à en gérer la mémorisation dans le système du fournisseur de contenu et y compris lorsque cet utilisateur client utilise plusieurs systèmes informatiques différents ou plusieurs configurations logicielles différentes pour accéder au service de ce fournisseur.

De plus, des services ou contenus de plus en plus nombreux sont ou seront accessibles par l'intermédiaire de réseaux ou de terminaux possédant la capacité de traitement de données numériques ou informatiques, et accédant à un même système informatique fournisseur de contenu, mais fonctionnant selon des normes différentes ou utilisant des interfaces distinctes avec l'utilisateur.

Ainsi, le site Internet d'un même serveur fournisseur de contenu peut par exemple être accessible à la fois par un micro-ordinateur classique de type PC ou Macintosh communiquant avec l'Internet sous HTTP par le protocole TCP/IP, et à la fois par un téléphone cellulaire se connectant sur l'Internet, mais qui est incapable de mémoriser ce type de données de contexte. Cette connexion peut se faire par exemple par le protocole WAP à travers une passerelle WAP Gateway par un protocole UDP lorsque l'on utilise la pile protocolaire WSP, ou TCP/IP pour le protocole WAP 2.0, ou même en communiquant par des messages sous formes de caractères émis au format SMS. Un tel site Internet peut également être accessible depuis un téléphone filaire ou cellulaire, par des commandes vocales reconnues sous forme de commandes codifiées dans le langage VoiceXML et transmises sous forme TCP/IP ou HTTP jusqu'au fournisseur de contenu, par une passerelle de type «Voice Gateway» reliant le réseau téléphonique et l'Internet.

D'autres types de terminaux, par exemple des organiseurs personnels de type PDA (pour « Personnel Digital Assistant) comme le « Palm Pilot » (marque déposée), peuvent ou pourront se connecter au réseau Internet sans être compatibles avec les requêtes de mémorisation de données de contexte utilisées par un fournisseur de contenu déterminé.

De même, certains types de terminaux peuvent communiquer avec un même système fournisseur de contenu selon plusieurs modes différents, d'une session de communication ou au sein d'une même session, par exemple par commandes VoiceXML pour certaines interactions et par le protocole WAP ou par messages SMS pour d'autres interactions.

Un autre but de l'invention est alors de permettre à un tel système informatique fournisseur de contenu de retrouver des données de contexte correspondant à un utilisateur client déterminé, sans avoir à en gérer la mémorisation dans le système du fournisseur de contenu et y compris lorsque cet utilisateur client utilise plusieurs terminaux dont au moins un fonctionne selon un mode ne permettant pas la mémorisation de telles données de contexte au sein de certains de ces terminaux, ou lorsque cet utilisateur client utilise un ou plusieurs terminaux communiquant avec le système fournisseur de contenu selon au moins un mode ne permettant pas la mémorisation de telles données de contexte de façon compatible avec les logiciels utilisés par le système fournisseur de contenu, ou lorsque cet utilisateur client utilise un ou plusieurs terminaux communiquant avec le système fournisseur de contenu selon plusieurs modes différents n'assurant pas la continuité de la gestion des données de contexte associées aux parties de session effectuées sous des modes différents.

Un ou plusieurs de ces buts sont atteints par un procédé de gestion de données de contexte, pour un fonctionnement multiterminal et multimode utilisant diverses configurations logicielles permettant la navigation sur au moins un réseau pour accéder à un service d'un fournisseur de contenu, représentant des informations soit spécifiques à une session de fourniture de contenu par communication informatique, à travers au moins un réseau informatique, entre au moins un dispositif de traitement de données numériques, dit terminal client, et au moins un système informatique fournisseur de contenu, soit spécifiques à l'utilisateur dudit terminal client (desdits terminaux clients), soit spécifiques à une combinaison de ces éléments, ces données de contexte étant mémorisées en dehors du (des) système(s) informatique(s) fournisseur(s) de contenu et à la demande dudit (desdits) système(s) fournisseur(s), caractérisé en ce qu'il comporte au moins une étape de mémorisation de ces données de contexte dans des moyens de mémorisation par un ou plusieurs agents informatiques, dits proxy de contexte, dans des moyens de mémorisation indépendants du terminal client (des terminaux clients) et de la configuration logicielle concernée utilisée, et accessibles depuis au moins un système informatique ou électronique gérant le réseau informatique.

Selon une particularité, le procédé comporte en outre au moins une opération d'accès du terminal client selon une configuration logicielle donnée au système fournisseur de contenu par envoi de données représentant une requête d'accès, cette opération d'accès comprenant les étapes suivantes :
- réception, par au moins un proxy de contexte, de données associées à une requête d'accès au système fournisseur de contenu de la part du terminal client selon la configuration logicielle donnée, ces données comprenant au moins une identification fournisseur et une identification client ;
- test par le proxy de contexte de l'existence ou non de données de contexte, mémorisées dans des moyens de mémorisation indépendants du terminal client, de la configuration logicielle utilisée et du système fournisseur, ces données de contexte correspondant à cette identification fournisseur et à cette identification client ;
- lecture de ces données de contexte, et éventuellement modification de ces données de contexte en fonction des informations reçues correspondant à la requête d'accès ;
- transmission, au système fournisseur de contenu, de tout ou partie des données de contexte lues ou d'une version de la requête d'accès modifiée en fonction desdites données de contexte.

Selon une particularité, le procédé comporte au moins une opération de réponse du système fournisseur de contenu au terminal client par envoi de données représentant une réponse, cette opération de réponse comprenant les étapes suivantes :
- réception, par au moins un agent proxy de contexte, de données associées à une réponse du système fournisseur de contenu au terminal client, cette réponse comprenant au moins une demande de mémorisation de données de contexte devant être mémorisées à l'extérieur dudit système fournisseur de contenu et à sa demande, lesdites données représentant au moins une identification fournisseur, et une identification client ;
- mémorisation de données de contexte, par le proxy de contexte, dans des moyens de mémorisation indépendants du terminal client et du système fournisseur de contenu, ces données de contexte représentant au moins cette identification fournisseur, cette identification client, et des informations associées à cette réponse.

Selon une particularité, l'opération de réponse du système fournisseur de contenu au terminal client comprend en outre une étape de demande au terminal client d'une autorisation de mémoriser des données de contexte.

Selon une particularité, le procédé comprend au moins une étape de communication où un agent proxy de contexte communique, directement ou indirectement, d'une part avec le système fournisseur de contenu par l'intermédiaire du réseau informatique, et d'autre part avec le terminal client ou avec une passerelle de mode permettant la communication du réseau informatique avec ce terminal client selon un mode de communication déterminé différent de celui utilisé par le réseau informatique.

Selon une particularité, le procédé comprend au moins une étape de communication où un premier agent proxy de contexte communique d'une part avec une première passerelle de mode permettant la communication avec ce terminal client selon un premier mode de communication déterminé, et d'autre part avec un deuxième agent proxy de contexte communiquant avec ledit terminal client, ce deuxième agent proxy de contexte communiquant avec ce terminal client soit par le réseau informatique soit par une deuxième passerelle de mode permettant la communication du réseau avec ce terminal client selon un deuxième mode de communication déterminé.

Selon une particularité, la session de fourniture de contenu par communication informatique comprend une première partie de session, réalisée par une communication selon le premier mode de communication, combinée avec une deuxième partie de session, réalisée par une communication selon le deuxième mode de communication, le procédé comprenant au moins une étape de mémorisation ou de lecture de données de contexte représentant des informations utilisables par l'agent proxy de contexte ou par le système informatique fournisseur de contenu pour associer ces deux parties de session.

Selon une particularité, au moins une étape de communication entre le système informatique fournisseur de contenu et l'agent proxy de contexte se fait par au moins un protocole compatible avec le protocole TCP/IP ou le protocole HTTP.

Selon une particularité, le terminal client comprend un terminal numérique ou un téléphone cellulaire, au moins une étape de communication entre le terminal client et le réseau se faisant par liaison sans fil selon la norme GSM, ou la norme DCS, ou la norme GPRS, ou la norme Airport, ou la norme Bluetooth, ou la norme ISO 802.11 (marques déposées), ou une variante ou évolution de ces normes.

Selon une particularité, le terminal client comprend un terminal numérique ou un téléphone cellulaire ou filaire, au moins une étape de communication entre le terminal client et le réseau se faisant un protocole compatible avec le protocole WAP, ou un protocole utilisant le langage VoiceXML, ou une variante ou évolution de ces protocoles.

Selon une particularité, le réseau permet la communication informatique entre le système fournisseur de contenu et le terminal client en utilisant le réseau Internet ou un réseau de type intranet.

Selon une particularité, les données de contexte émises ou reçues par le système informatique fournisseur de contenu sont organisées selon un format compatible avec les «cookies» définis par le protocole HTTP.

Pour atteindre ces objectifs, l'invention propose également un système de gestion de données de contexte, pour un fonctionnement muliterminal et multimode utilisant diverses configurations logicielles permettant la navigation sur au moins un réseau pour accéder à un service d'un fournisseur de contenu, représentant des informations, soit spécifiques à une session de fourniture de contenu par communication informatique, à travers au moins un réseau informatique, entre au moins un dispositif de traitement de données numériques, dit terminal client, et au moins un système informatique fournisseur de contenu, soit spécifiques à l'utilisateur dudit terminal client (desdits terminaux clients), soit spécifiques à une combinaison de ces éléments, ces données de contexte étant mémorisées en dehors du (des) système(s) informatique(s) fournisseur(s) de contenu et à la demande dudit (desdits) système(s) fournisseur(s), caractérisé en ce qu'il comprend au moins un agent logiciel, dit proxy de contexte, exécuté par des moyens de calcul et communiquant avec le réseau informatique, ce proxy de contexte mémorisant ces données de contexte dans des moyens de mémorisation indépendants du terminal client (des terminaux clients) et de la configuration logicielle concernée.

Selon une particularité, le proxy de contexte comprend d'une part des moyens de lire et d'analyser des données représentant une réponse du système fournisseur au terminal client au sein d'une telle session et comportant des données de contexte que le système fournisseur demande au terminal client de mémoriser, et d'autre part des moyens d'identifier ce système fournisseur, des moyens d'identifier ce terminal client ou l'utilisateur de ce terminal client, ainsi que des moyens de mémoriser tout ou partie de ces données de contexte en association avec l'identification de ce système fournisseur, ou de ce terminal client, ou de l'utilisateur de ce terminal client.

Selon une particularité, le proxy de contexte comprend des moyens de lire et d'analyser des données représentant une requête d'accès du terminal client selon une configuration logicielle donnée au système fournisseur au sein d'une telle session, des moyens d'identifier ce système fournisseur, des moyens d'identifier ce terminal client ou l'utilisateur de ce terminal client, ainsi que des moyens de compléter ou de modifier les données de cette requête d'accès en fonction de données de contexte précédemment mémorisées par lui et en rapport avec ce système fournisseur et ce terminal client ou l'utilisateur de ce terminal client.

Selon une particularité, le système de gestion de données de contexte comprend des moyens d'interposition du proxy de contexte entre le terminal client et l'adresse ou l'identification par laquelle il cherche à entrer en communication avec le système fournisseur, ou des moyens de redirection du terminal client depuis cette même adresse vers une adresse conduisant au proxy de contexte, ces moyens d'interposition ou de redirection permettant au proxy de contexte de recevoir en lieu et place du système fournisseur tout ou partie des données envoyées par le terminal client audit système fournisseur de contenu.

Selon une particularité, le système fournisseur de contenu est accessible, depuis le réseau informatique, sous la forme d'un site au standard « world wide web » et communique avec le proxy de contexte selon le protocole TCP/IP ou HTTP.

Selon une particularité, le réseau informatique comprend une ou plusieurs parties utilisant le réseau Internet ou un réseau Intranet pour permettre la communication informatique entre le proxy de contexte, le terminal client, et le système fournisseur, ou entre deux de ces éléments.

Selon une particularité, le terminal client communique avec le réseau informatique à travers au moins un système informatique, dit passerelle de mode, assurant le passage de données informatiques entre d'une part le réseau informatique et d'autre part un deuxième réseau permettant le transfert de données numériques sous une forme non directement compatible avec le réseau informatique ou avec le système fournisseur de contenu.

Selon une particularité, au moins une passerelle de mode permet la communication entre d'une part le réseau informatique et d'autre part un réseau de téléphonie filaire, ou un réseau de téléphonie cellulaire GSM ou DCS ou GPRS, ou un réseau de communication selon le standard Bluetooth ou le standard Airport ou la norme ISO 802.11 (marques déposées).

Selon une particularité, le système comprend une pluralité d'agents proxy de contexte communiquant entre eux, ou avec le système fournisseur de contenu, ou les deux, à travers le réseau informatique, au moins un de ces proxy de contexte étant intégré dans une passerelle assurant la transformation entre plusieurs protocoles de communication ou entre plusieurs modes de transmission.

L'invention, avec ses caractéristiques et avantages, ressortira plus clairement à la lecture de la description faite en référence aux dessins annexés dans lesquels :
- la figure 1 représente un schéma symbolique d'un système selon l'invention utilisant un procédé selon l'invention, dans un mode de réalisation comportant un proxy de contexte intermédiaire entre le fournisseur et plusieurs réseaux d'accès ou passerelles de mode ;
- la figure 2 représente un schéma symbolique d'un système selon l'invention utilisant un procédé selon l'invention, dans un mode de réalisation comportant plusieurs proxy de contexte, dont certains intégrés à une passerelle de mode ;
- la figure 3 représente un organigramme d'un mode de réalisation du procédé selon l'invention dans le cas où un terminal client émet une requête d'accès à un fournisseur de contenu ;

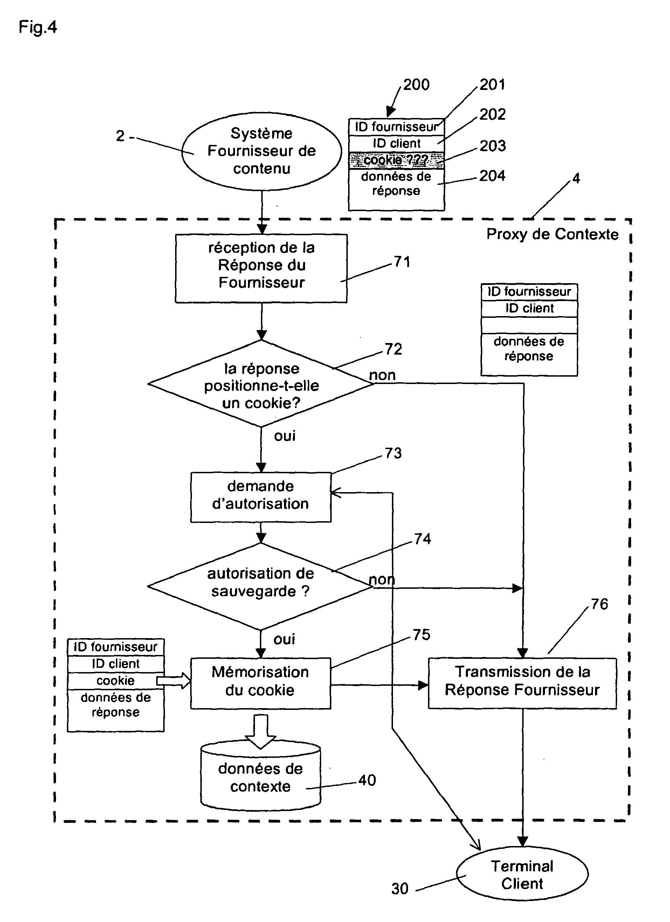

- la figure 4 représente un organigramme d'un mode de réalisation du procédé selon l'invention dans le cas où un fournisseur de contenu émet une réponse vers un terminal client.

Avant d'aborder la description de l'invention, il est nécessaire de préciser les notions suivantes.

On appellera agent logiciel un composant logiciel ayant la capacité de réagir à des interactions avec d'autres agents logiciels ou avec des évènements logiciels ou matériels. Il doit être évident que le mode d'exécution ou de mémorisation d'un agent logiciel déterminé peut varier au sein d'un ou plusieurs systèmes informatiques, tant que leur organisation ne contredit pas le fonctionnement du procédé ici décrit.

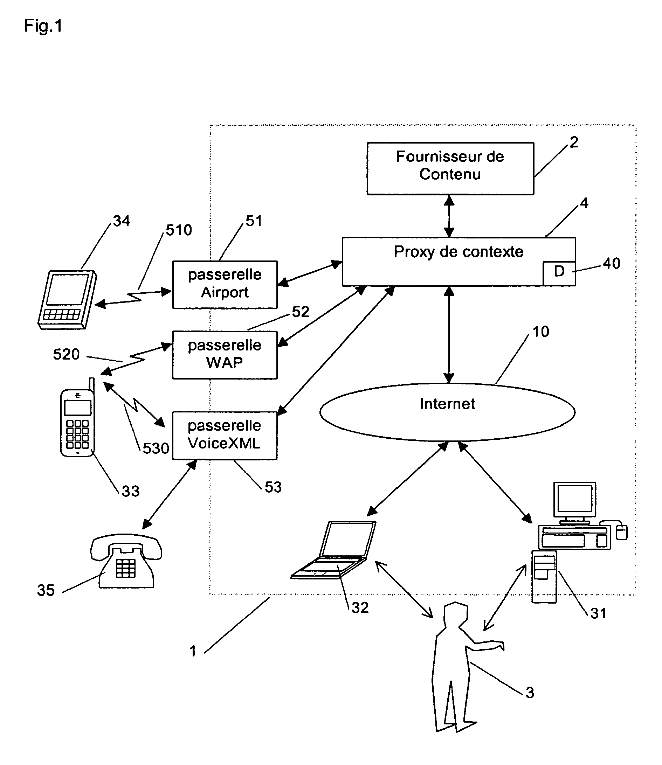

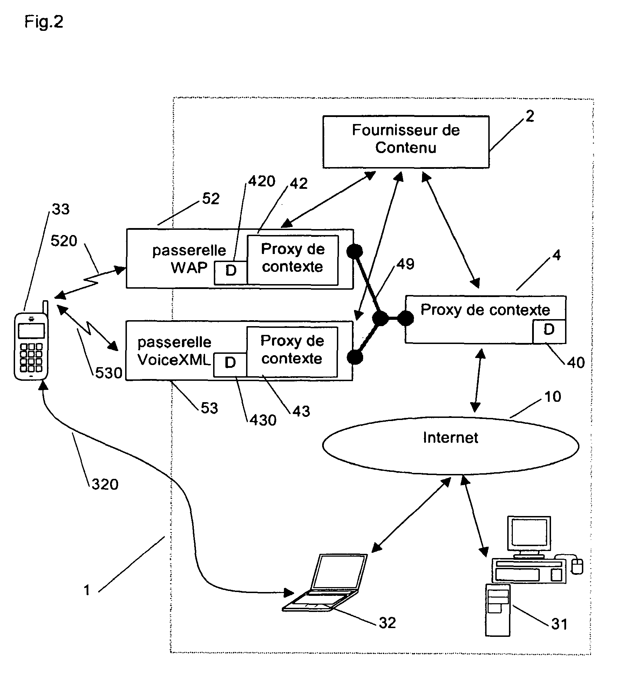

Dans un mode de réalisation représenté en figures 1 et 2, un organisme ou prestataire fournisseur de contenu utilise un système (2) informatique fournisseur de contenu pour proposer un accès à un nombre important et variable d'utilisateurs (3) utilisant des terminaux (31 à 35) clients, par communication informatique à travers un réseau (1) informatique.

Ces terminaux clients peuvent être par exemple des ordinateurs (31, 32), munis de logiciels de navigation, par exemple compatibles avec les langages HTML ou XML, et communiquant avec le réseau Internet (10) ou un réseau de type intranet, par exemple de façon classique en utilisant les protocoles TCP/IP et HTTP pour accéder à des sites web, c'est-à-dire consultables selon le standard « W3 » ou « WWW » (pour « World Wide Web »).

Au sein de la présente description, le réseau (1) informatique sera mentionné comme unique, mais il est évident que ce réseau peut comprendre plusieurs parties d'architectures différentes ou variables. La communication entre deux systèmes informatiques de ce réseau (1) peut comprendre l'utilisation du réseau Internet sur une ou plusieurs parties de ce réseau. Les utilisateurs peuvent par exemple se connecter au site (2) du fournisseur de contenu par le réseau Internet (10), éventuellement par l'intermédiaire d'un réseau local et/ou d'une passerelle locale. Certaines fonctions décrites ici comme relevant du système client, comme les «cookies», peuvent alors être réalisées au niveau de ce réseau local ou de cette passerelle.

Ce réseau (1) informatique peut également utiliser le réseau Internet pour communiquer entre le système (2) fournisseur de contenu et le proxy (4) de contexte, ou entre une passerelle (51, 52, 53) et le proxy (4) de contexte ou le système (2) fournisseur de contenu. D'autres types de connexions peuvent également être incluses dans ce réseau (1), comme des lignes spécialisées ou des communications X25, du moment qu'elles permettent la communication entre les différents éléments de ce réseau (1) selon les même protocoles.

De façon courante, un même utilisateur (3) peut utiliser alternativement, voire en même temps, plusieurs ordinateurs différents ou plusieurs logiciels différents pour se connecter au site (2) d'un même fournisseur de contenu. Il peut par exemple utiliser d'une part un ordinateur (31) de bureau et d'autre part un ordinateur (32) portable ou de voyage.

Le procédé selon l'invention comprend l'utilisation d'un agent (4) logiciel intermédiaire, dit proxy de contexte, qui gère en tout ou partie des données de contexte relatives à l'utilisateur (3), ou aux différentes sessions qu'il effectue à l'aide des différents systèmes (31, 32) informatiques. Cet agent proxy (4) de contexte peut jouer ce rôle d'intermédiaire de différentes façons selon les applications de l'invention. Ce rôle peut être réalisé par exemple par interposition entre système client et système fournisseur, en gérant l'adresse URL (pour « Universal Resource Locator ») d'accès au site du système (2) fournisseur. Ce rôle peut également être réalisé par une redirection depuis un système gérant l'adresse URL du site du fournisseur de contenu. Par ailleurs, selon les applications, le proxy de contexte peut avoir à gérer et transmettre la totalité des données échangées au cours d'une session entre systèmes clients et fournisseurs, ou n'avoir à traiter qu'une partie de ces données, et en particulier les données de contexte en tout ou partie.

Cet agent proxy de contexte peut bien sûr être mis en oeuvre en différentes régions du réseau (1) informatique reliant les terminaux clients et le ou les systèmes (2) utilisés par le fournisseur de contenu. Si plusieurs terminaux clients sont utilisés par un utilisateur tout en passant par l'Internet, ce proxy de contexte peut par exemple être mis en oeuvre sur un serveur du fournisseur d'accès Internet (FAI), chez un prestataire spécialisé dans l'hébergement de site de fournisseurs de contenu ou effectuant des prestations pour de tels fournisseurs de contenu, ou directement dans le système (2) informatique du fournisseur de contenu. Dans d'autres variantes non représentées, le réseau (1) informatique dans son ensemble peut également présenter d'autres configurations ou topographies différentes voire hétérogènes. Il peut ainsi être constitué en tout ou partie de réseaux locaux (LAN), régionaux (MAN) étendus (WAN), ou intégrer une ou plusieurs parties fonctionnant sous la forme de réseaux de type intranet.

Ainsi qu'illustré en figure 1, le réseau (1) informatique peut également permettre un accès au système (2) fournisseur de contenu depuis un terminal (33, 34, 35) client ayant un mode de fonctionnement qui n'est pas directement compatible avec ce système (2) fournisseur de contenu ou avec le réseau (1), ainsi que décrit plus loin. Cet accès est rendu possible par une communication du réseau (1) avec un tel terminal à travers un système dit passerelle (51, 52, 53) de mode, le fournisseur étant lui même relié audit réseau (1). Cette passerelle de mode prend alors en charge la transformation de protocole nécessaire pour que les interactions du point de vue du fournisseur se fassent en HTTP.

Une telle passerelle de mode peut communiquer directement avec le terminal client, ou communiquer avec un autre réseau permettant cette communication, ainsi qu'illustré en figure 2. De telles passerelles existent ou existeront de plus en plus, et peuvent être par exemple une passerelle (52) WAP permettant la communication entre le réseau (1) informatique et un téléphone filaire (35), par communication à travers un Réseau Téléphonique Commuté, ou un téléphone (33) cellulaire à la norme GSM ou DCS par communication à travers un réseau de téléphonie cellulaire. Une telle passerelle de mode peut également être une passerelle (51) comprenant une borne de type « Airport » permettant la communication (510) sans fil d'un assistant (34) personnel ou d'un ordinateur (32) portable tel que le Macintosh l-Book (marque déposée) avec l'Internet (10) ou avec un réseau local. Des passerelles permettant la communication d'un ordinateur portable, ou d'un assistant personnel, peuvent également utiliser des bornes ou des mini-réseaux locaux à la norme « Bluetooth », ou à la norme ISO 802.11, pour un périphérique de liaison par câble (320), ou par infrarouge, ou par radio, ce périphérique étant lui-même relié à un ordinateur communiquant avec le réseau (1).

Avec l'évolution des normes de téléphonie cellulaires, en particulier avec l'arrivée des normes GPRS et UMTS, de telles passerelles peuvent également permettre d'échanger des commandes ou des données sous une forme compatible avec un tel système (2) fournisseur de contenu. Une passerelle entre le réseau (1) et un réseau de téléphonie cellulaire peut en particulier comprendre des ressources logicielles et matérielles lui permettant d'interpréter des interactions vocales sous la forme de commandes logicielles, ou de restituer des informations de type vocal à partir d'informations logicielles. Le langage «VoiceXML » est un exemple de langage utilisable par une telle passerelle (53), dite « Voice Gateway » ou Passerelle Vocale, pour communiquer avec le réseau (1), en envoyant automatiquement des commandes informatiques, similaires aux commandes XML, à partir d'instructions vocales reçues depuis un téléphone.

Dans une variante non représentée, au sein du réseau (1), de telles passerelles de modes peuvent bien sûr également communiquer avec le proxy de contexte et le système fournisseur de contenu par l'intermédiaire du réseau Internet ou d'un réseau de type Intranet.

Dans une variante représentée en figure 2, les fonctions du proxy de contexte sont assurées par plusieurs agents logiciels proxys (4, 42, 43) de contexte, répartis dans le réseau (1), et dont certains (42, 43) peuvent être associés ou intégrés à des passerelles (52, respectivement 53) de mode. Une ou plusieurs passerelles assurent alors, en plus de la transformation de protocoles, le rôle de mémorisation et de retransmission des «cookies».

Dans une option de cette variante, ces proxy (4, 42, 43) de contexte répartis dans le réseau (1) pourront également être prévus pour comporter des moyens (49) de communiquer entre eux par l'intermédiaire du réseau (1), permettant ainsi une mise en commun de leurs données de contexte, ou «cookies» de session, qui puisse être transparente vis-à-vis du fournisseur (2) de contenu.

Dans le mode de réalisation représenté en figure 1, les communications entre le terminal client et le système (2) fournisseur de contenu passent par l'agent (4) proxy de contexte. Ce transit est obtenu par exemple en faisant aboutir au proxy (4) de contexte l'adresse URL correspondant au système (2) fournisseur de contenu et au site web qu'il gère. Cette adresse URL peut également aboutir au système (2) fournisseur, celui-ci redirigeant alors les demandes d'accès de terminal clients vers une adresse URL aboutissant au proxy de contexte.

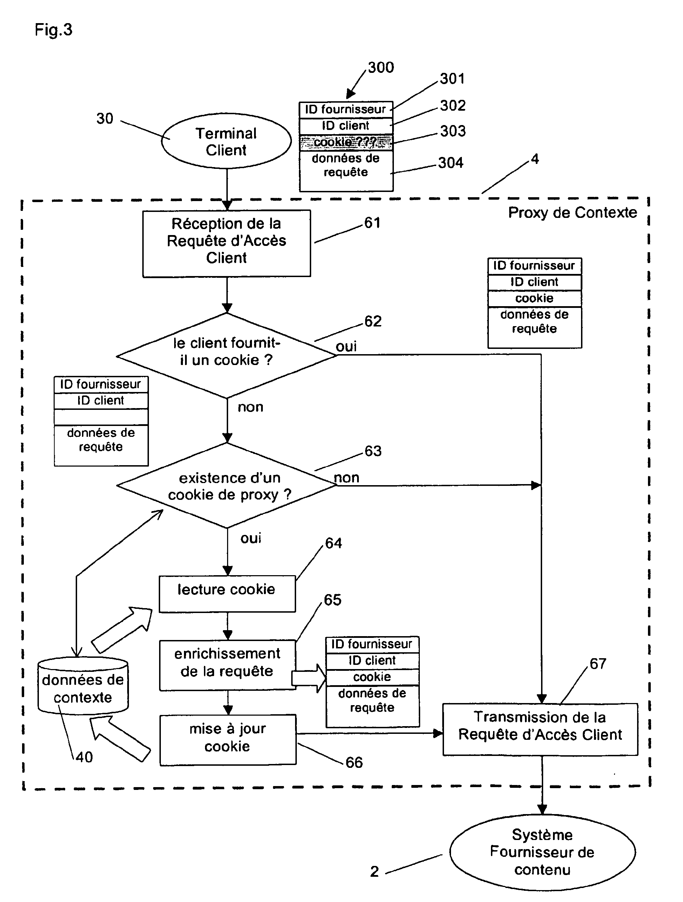

Ainsi qu'illustré en figure 3, une requête (300) d'accès HTTP au système (2) fournisseur de contenu venant du terminal (30) client est reçue (61) par le proxy (4) de contexte. Cette requête comprend des données (304) de requête associées à une ou plusieurs en-têtes contenant des données représentant différentes informations complémentaires. Ces informations sont en particulier une identification (301) du fournisseur à qui s'adresse la requête d'accès, une identification (302) du client, et d'éventuelles données de contextes ou un «cookie» (303) mémorisés au cours d'une session ou partie de session précédente par le terminal (30) client.

Selon les applications, l'identification (301) fournisseur peut comporter l'adresse IP ou URL d'accès au système (2) fournisseur. Selon les modes de réalisation et selon les modes d'accès, l'identification (302) du terminal (30) client peut prendre différentes formes, et être plus ou moins précise ou permanente. Il peut s'agir d'une adresse IP identifiant le terminal client au sein du réseau TCP/IP et transmis par le fournisseur d'accès Internet du client ou par une passerelle intermédiaire. Il peut s'agir d'un nom saisi par l'utilisateur pour accéder à un compte ou à un service, ou d'un numéro de série d'abonnement, de terminal, de clé de sécurité, de carte à puce, ou de logiciel. Il peut s'agir d'un numéro d'appelant provenant d'un réseau téléphonique filaire ou cellulaire, par exemple un numéro MSISDN ou identifiant transmis par l'intermédiaire d'un élément du réseau téléphonique ou d'une passerelle (51, 52, 53) de mode.

Le proxy (4) de contexte comprend ou utilise des moyens (40, 402, 403) de détection de cette identification (302) client, prévus pour détecter ou recevoir un ou plusieurs de ces identifiants et éventuellement les combiner entre eux pour obtenir ladite identification (302) client.

A réception de cette requête d'accès, le proxy de contexte effectue une étape (62) de test des informations contenues ou associées à cette requête pour savoir si le terminal client fournit un « cookie » (303), c'est-à-dire des données de contexte, utilisable par ce fournisseur ou en rapport avec ce fournisseur. Cette étape comprend un test de l'identification (302) client et/ou de l'identification (301) fournisseur.

Si la requête d'accès ne comporte pas de données de contexte, ou des données ne correspondant pas à des paramètres déterminés, le proxy de contexte effectue une étape (63) de test de l'identification (301) fournisseur et de l'identification (302) de cette requête (300) d'accès. En comparant ces identifications (301, 302) et les différentes données (40) de contexte auxquelles il a accès, le proxy (4) de contexte détermine alors s'il dispose déjà, pour ce terminal (30) client ou pour l'utilisateur (3) de ce terminal client, de données de contexte utilisables par ce fournisseur (2) ou en rapport avec ce fournisseur.

Si de telles données (40) de contexte sont présentes, elles sont lues au cours d'une étape (64) par le proxy de contexte, qui s'en sert pour enrichir le contenu de la requête (300) d'accès reçue du terminal (30) client. Selon les applications, cet enrichissement peut se faire en ajoutant les données lues à la requête d'accès, ou en modifiant tout ou partie de cette requête en fonction de ces mêmes données de contexte. Dans le mode de réalisation décrit ici, cet enrichissement comprend en particulier l'insertion de ces données (40) de contexte dans l'en-tête de la requête (300) d'accès, comme s'il s'agissait d'un «cookie» (303) reçu directement depuis le terminal (30) client. Dans une variante (non représentée) appliquée au mécanisme d'URL dynamique cité plus loin, cet enrichissement peut comprendre la modification de l'adresse demandée, en y ajoutant les données (301) d'identification fournisseur ou les données (302) d'identification du terminal ou du client, à partir de ces données (40) de contexte retrouvées par le proxy de contexte.

Selon les applications, le proxy de contexte peut également modifier, lors d'une étape (66), les données (40) de contexte mémorisées, par exemple pour y enregistrer la date de cette requête d'accès ou mettre à jour la durée de vie mémorisée pour ce «cookie».

Le proxy de contexte va alors transmettre la requête (300) d'accès au système (2) fournisseur de contenu, enrichie à partir de données (40) de contexte fournies par lui le cas échéant.

Si le terminal (30) client se connecte au système (2) fournisseur sans «cookie» alors que son utilisateur a déjà consulté ce même fournisseur depuis un autre terminal au cours d'une session précédente, il est donc possible au fournisseur de contenu d'avoir connaissance de cette connexion précédente par des données de contexte fournies par le proxy de contexte, dès lors que certaines données (302) d'identification client sont communes à ces deux sessions. Il est donc possible au fournisseur de contenu de reconnaître cet utilisateur, avec tous les avantages connus à cela, en particulier dans le domaine commercial ou statistique.

Ainsi qu'illustré en figure 3, une réponse (200) du système (2) fournisseur de contenu au terminal (30) client est reçue (71) par le proxy (4) de contexte au cours d'une session de communication. Cette réponse comprend des données (204) de réponse associées à une ou plusieurs en-têtes contenant des données représentant différentes informations complémentaires. Ces informations sont en particulier une identification (201) du fournisseur de qui émane la réponse, une identification (202) du client à qui s'adresse la réponse, et d'éventuelles données de contexte ou un «cookie» (203) que le système (2) fournisseur souhaite faire mémoriser, ou positionner, au sujet de cette session ou de l'utilisateur (30) de ce terminal (30) client.

Selon les applications, l'identification (201) fournisseur peut comprendre l'adresse IP ou URL du système (2) fournisseur, ou un identifiant d'abonnement de ce fournisseur ou d'un groupe de fournisseurs différents pouvant être concernés par cette réponse ou cette session ou les cookies qu'elles positionnent.

Selon les modes de réalisation et selon les modes d'accès, l'identification (202) du terminal (30) client peut prendre différentes formes, et être plus ou moins précise ou permanente. Il peut s'agir d'une adresse IP identifiant le terminal client au sein du réseau TCP/IP et transmis par le fournisseur d'accès Internet du client ou par une passerelle intermédiaire. Il peut s'agir d'un nom saisi par l'utilisateur pour accéder à un compte ou à un service, ou d'un numéro de série d'abonnement, de terminal, de clé de sécurité, de carte à puce, ou de logiciel. Il peut s'agir d'un numéro d'appelant provenant d'un réseau téléphonique filaire ou cellulaire, par exemple un numéro MSISDN ou un identifiant transmis par l'intermédiaire d'un élément du réseau téléphonique ou d'une passerelle (51, 52, 53) de mode.

Le proxy (4) de contexte va alors effectuer une étape (72) de test des informations contenues ou associées à cette réponse, pour savoir si cette réponse demande la mémorisation, ou le positionnement, d'un «cookie» (203) dans le terminal (30) client, en particulier selon le standard des «cookies» utilisés dans les protocoles WWW et HTTP.

Si cette réponse comporte une demande (203) de mémorisation de «cookie», le proxy de contexte va alors effectuer une étape de mémorisation (75) de ce «cookie» (203), sous la forme de données (40) de contexte, dans des moyens de mémorisation indépendant du terminal (30) client, par exemple dans les moyens de mémorisation du système informatique qui exécute cet agent (4) proxy de contexte. Ainsi, quel que soit le devenir du terminal (30) utilisé par le client accédant au fournisseur de contenu, les données (203) de contexte envoyées par le système (2) fournisseur pourront être conservées et retrouvées lors d'une prochaine requête (300) d'accès telle que décrite plus haut.

Selon une option permettant de laisser à l'utilisateur du terminal client un contrôle des informations mémorisées sur lui, le proxy de contexte effectue une étape (73) de demande au terminal (30) client s'il est programmé pour autoriser la mémorisation de données de contexte, de façon générale ou dans le cas présent. Cette étape (73) de demande d'autorisation peut se faire par exemple par le même canal utilisé pour échanger les requêtes et réponses avec ce terminal client. En fonction de la réponse du terminal (30) client, le proxy (4) de contexte va alors effectuer ou non une étape (75) de mémorisation du «cookie» (203) demandé par le fournisseur, sous la forme de données (404) de contexte stockée dans des moyens de mémorisation indépendants du terminal (30) client et du système (2) fournisseur.

Le proxy de contexte pourra ensuite transmettre au terminal (30) client les données représentant la réponse (200) du système (2) fournisseur de contenu.

Par rapport au procédé connu de mémorisation de «cookies» dans le terminal client, il est ainsi possible de mémoriser des données de contexte de façon transparente pour le fournisseur (2) de contenu, même si le terminal (30) client est d'un type non compatible avec le procédé classique ou d'un type ne permettant pas la mémorisation de données.

Dans le cas où l'accès au système (2) fournisseur de contenu se fait par un terminal client disposant de plusieurs modes (520, 530, 320) de communication avec le réseau (1), le procédé selon l'invention permet également de mémoriser, puis d'associer entre elles des données de contexte, ou «cookie» de session, mémorisées pour chacun de ces différents modes (520, 530, 320). Si une même session de communication entre l'utilisateur client et le système (2) fournisseur de contenu comprend l'utilisation alternative ou simultanée de plusieurs modes de communication en plusieurs parties de session, avec un même terminal (33) client, ou avec plusieurs terminaux (33, 32, 31) clients, le procédé selon l'invention permet alors d'associer ces différentes parties de session, par exemple pour reconstituer l'unité d'une session multimodale.

Un exemple de session multimodale peut être l'accès à un service, sur le site du fournisseur de contenu, en utilisant un téléphone (33) portable cellulaire, à la fois par des accès selon le mode WAP et par des accès selon le mode VoiceXML. Pendant une partie de session où un utilisateur (3) navigue dans le service en utilisant son téléphone selon le mode d'accès WAP à travers la passerelle (52) WAP, le système (2) fournisseur émet un «cookie» que le proxy (4) de contexte mémorise « au vol » dans ses moyens de mémorisation. Après certaines actions dans le service, le fournisseur de contenu propose à l'utilisateur de continuer sa navigation grâce à une interface vocale, dans un mode de type VoiceXML. Pour cela, le service propose par exemple à l'utilisateur une commande de type WAP intitulée « WTA », qui va déclencher l'appel de la passerelle (53) VoiceXML.

Lorsque la passerelle VoiceXML émet une requête HTTP vers le système (2) fournisseur de contenu, cette requête passe par le proxy(4) de contexte. En comparant les identifiants clients reçus par ses moyens (40) de détection depuis les passerelles WAP puis VoiceXML, avec des données déjà mémorisées, par exemple dans un précédent «cookie» de session, le proxy de contexte constate que ces identifiants correspondent à un même téléphone (33) et s'adressent au même fournisseur. Il va alors enrichir la requête provenant de la passerelle VoiceXML avec le «cookie» de session qu'il avait précédemment mémorisé lors de la partie WAP de la session. La requête de type VoiceXML peut alors être traitée par le système fournisseur avec le bénéfice du contexte de session généré lors de l'accès WAP précédent.

Lorsque l'utilisateur termine son accès vocal, l'accès WAP peut reprendre, lorsque le téléphone détecte un événement de type WAP intitulé « WTA fin d'appel » ou lorsque l'utilisateur valide un lien ou un bouton correspondant sur la page WAP précédemment affichée.

De la même façon, lorsque la session revient en mode WAP, le proxy de contexte effectue l'association avec la partie de session vocale, en identifiant l'utilisateur et en retrouvant le «cookie» de session précédemment mémorisé lors d'une requête VoiceXML. La suite de la session bénéficie alors du contexte mémorisé et tenu à jour à la fois pendant la première partie de session WAP et pendant la partie de session VoiceXML. Le procédé permet ainsi de maintenir une continuité du contexte applicatif au cours d'une session utilisant ces deux types d'accès.

De telles sessions multimodales peuvent ainsi être réunifiées, par exemple pour un traitement plus précis ou plus sûr, dans des applications variées. Il peut s'agir par exemple d'utiliser un téléphone cellulaire pour effectuer certaines interactions trop complexes pour un clavier téléphonique, par exemple indiquer une destination à un système de gestion d'itinéraire, ces interactions passant alors par une passerelle (53) vocale. Les informations devant être permanentes au cours d'une même session multimodale peuvent alors être transmises par une passerelle WAP ou par messages SMS, par exemple pour afficher un plan de parcours sur l'écran du téléphone ou de l'assistant personnel.

Au sein du réseau (1), l'ensemble des données de contexte obtenues par le procédé selon l'invention peut être géré à différents niveaux. Un ou plusieurs proxy de contexte peuvent par exemple gérer l'association des données de contexte provenant de différentes parties de session pour reconstituer l'ensemble de la session multimodale, de façon transparente pour le système (2) fournisseur de contenu.

Un ou plusieurs proxy de contexte peuvent également enrichir ces données de contexte en les combinant avec diverses informations provenant de certains éléments de gestion du réseau (1) informatique en lui-même, tels qu'un routeur ou un serveur, par exemple un serveur Radius (marque déposée). De telles informations peuvent être par exemple une adresse IP utilisée par le protocole TCP/IP pour identifier un noeud au sein du réseau (1), ou un numéro d'identifiant de téléphone cellulaire ou de la carte SIM qu'il utilise, transmis par exemple par la passerelle de mode.

Le procédé permet ainsi de restituer au fournisseur la totalité d'une session multimodale, comme s'il s'agissait d'une simple session unique.

Le procédé selon l'invention permet ainsi la mémorisation de «cookies» et la lecture de ces «cookies», de façon transparente pour un serveur web constituant alors le système (2) fournisseur, en particulier dans le cas d'un accès depuis un téléphone (33) portable ou un téléphone (35) filaire, ou d'un assistant (34) personnel, depuis plusieurs ordinateurs (31, 32) différents, ou d'une combinaison de tels dispositifs.

Dans d'autres variantes (non représentées), un système fournisseur de contenu utilise un mécanisme d'adresses calculées en fonction du contexte de chaque session, également appelé « URLs dynamiques » (à partir de URL, pour « Universal Resource Location »). Ce mécanisme comprend, entre autres, le fait d'associer des données d'identifications à certaines des adresses communiquées au terminal client pour le guider au cours d'une session tant que liens de navigation au sein du site web du fournisseur de contenu.

En choisissant de suivre un lien dont l'adresse lui a été communiquée par le système fournisseur, le terminal client émet alors une requête d'accès contenant des données calculées précédemment par le fournisseur en fonction du contexte de cet utilisateur ou de son terminal. Ces données peuvent alors être testées et mémorisées par le procédé selon l'invention, sous la forme de données (40) de contexte, de la même façon que les «cookies» décrits plus haut.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de gestion de données (40) de contexte, les données (40) de contexte incluant des données représentant des informations:
- soit spécifiques à une session de fourniture de contenu par communication informatique, à travers au moins un réseau (1) informatique, entre au moins un dispositif de traitement de données numériques, dit terminal (30 à 35) client, et au moins un système (2) informatique fournisseur de contenu,
- soit spécifiques à un utilisateur dudit au moins un terminal client,
- soit spécifiques à une combinaison de ces éléments,
les données (40) de contexte étant mémorisées en dehors du système (2) informatique fournisseur de contenu et à la demande dudit système (2) fournisseur, le procédé convenant à un fonctionnement multiterminal et multimode, utilisant diverses configurations logicielles permettant la navigation sur au moins un réseau pour accéder à un service d'un fournisseur de contenu, le procédé comportant au moins une étape de mémorisation desdites données (40) de contexte par plusieurs agents informatiques, dits proxy (4) de contexte, dans des moyens de mémorisation indépendants dudit au moins un terminal client et de la configuration logicielle concernée utilisée, et accessibles depuis au moins un système informatique ou électronique gérant le réseau (1) informatique, le procédé étant **caractérisé en ce qu'**il comprend au moins :
- une étape de communication où un premier proxy (42) de contexte communique d'une part avec une première passerelle (52) de mode permettant la communication avec ce terminal (33) client selon un premier mode (520) de communication déterminé, et d'autre part avec un deuxième proxy (43) de contexte communiquant avec ledit terminal client, ce deuxième proxy (43) de contexte communiquant avec ce terminal client soit par le réseau (1, 320) informatique soit par une deuxième passerelle (53) de mode permettant la communication du réseau (1) avec ce terminal client selon un deuxième mode (530) de communication déterminé, la session de fourniture de contenu par communication informatique comprenant une première partie de session, réalisée par une communication selon le premier mode (520) de communication, combinée avec une deuxième partie de session, réalisée par une communication selon le deuxième mode (530) de communication,
- une étape de mémorisation ou de lecture de données (40) de contexte représentant des informations utilisables par un des proxy (4) de contexte ou par le système (2) informatique fournisseur de contenu pour associer ces deux parties de session.

2. Procédé selon la revendication 1, **caractérisé en ce que** qu'il comporte en outre au moins une opération d'accès du terminal (30) client selon une configuration logicielle donnée audit au moins un système (2) fournisseur de contenu par envoi de données représentant une requête (300) d'accès, cette opération d'accès comprenant les étapes suivantes:
- réception (61), par au moins un des proxy (4) de contexte, de données associées à une requête (200) d'accès au système (2) fournisseur de contenu de la part du terminal (30) client selon la configuration logicielle donnée, ces données comprenant au moins une identification (301) fournisseur et une identification (302) client;
- test (62, 63) par ledit proxy (4) de contexte de l'existence ou non de données (40) de contexte, mémorisées dans les moyens de mémorisation indépendants du terminal (30) client, de la configuration logicielle utilisée et du système (2) fournisseur, ces données (40) de contexte correspondant à cette identification (301) fournisseur et à cette identification (302) client;
- lecture (64) de ces données (40) de contexte, et éventuellement modification (65) de ces données de contexte en fonction des informations reçues correspondant à la requête d'accès;
- transmission (67), au système (2) fournisseur de contenu, de tout ou partie des données (40) de contexte lues ou d'une version de la requête (300) d'accès modifiée en fonction desdites données (40) de contexte.

3. Procédé selon la revendication 1 ou 2, **caractérisé en ce qu'**il comporte au moins une opération de réponse du système (2) fournisseur de contenu au terminal (30) client par envoi de données représentant une réponse (200), cette opération de réponse comprenant les étapes suivantes:
- réception (71), par au moins un des proxy (4) de contexte, de données associées à une réponse (200) du système (2) fournisseur de contenu au terminal (30) client, cette réponse comprenant au moins une demande (203) de mémorisation de données (40) de contexte, ces données de contexte devant être mémorisées à l'extérieur dudit système fournisseur de contenu et à sa demande;
- mémorisation (75) de données (40) de contexte, par le proxy (4) de contexte, dans les moyens de mémorisation indépendants du terminal (30) client et du système (2) fournisseur de contenu, ces données de contexte représentant des informations associées à cette réponse (200), ou au terminal (30 à 35) client, ou à l'utilisateur (3) de ce terminal client, ou au système (2) fournisseur de contenu.

4. Procédé selon la revendication 3, **caractérisé en ce que** la mémorisation des données (40) de contexte comprend la mémorisation d'un identifiant client ou d'un identifiant de session.

5. Procédé selon la revendication 3 ou 4, **caractérisé en ce que** l'opération de réponse du système (2) fournisseur de contenu au terminal (30) client comprend en outre une étape (73) de demande au terminal client d'une autorisation de mémoriser des données (40) de contexte.

6. Procédé selon l'une des revendications 1 à 5, **caractérisé en ce qu'**il comprend au moins une étape de communication où un des proxy (4) de contexte communique, directement ou indirectement, d'une part avec le système (2) fournisseur de contenu par l'intermédiaire du réseau (1) informatique, et d'autre part avec le terminal (33, 34, 35) client ou avec une passerelle (51, 52, 53) de mode permettant la communication du réseau (1) informatique avec ce terminal client selon un mode de communication (510, 520, 530) déterminé différent de celui utilisé par le réseau informatique.

7. Procédé selon l'une des revendications 1 à 6, **caractérisé en ce qu'**au moins une étape de communication entre le système (2) informatique fournisseur de contenu et l'un des proxy (4) de contexte se fait par au moins un protocole compatible avec le protocole TCP/IP ou le protocole HTTP.

8. Procédé selon l'une des revendications 1 à 7, **caractérisé en ce que** le terminal client comprend un terminal (34) numérique ou un téléphone (33) cellulaire, au moins une étape de communication entre le terminal client et le réseau (1) se faisant par liaison sans fil selon la norme GSM, ou la norme DCS, ou la norme GPRS, ou la norme Airport, ou la norme Bluetooth, ou la norme ISO 802.11 (marques déposées), ou une variante ou évolution de ces normes.

9. Procédé selon l'une des revendications 1 à 8, **caractérisé en ce que** le terminal client comprend un terminal (34) numérique ou un téléphone (33) cellulaire ou filaire (35), au moins une étape de communication entre le terminal client et le réseau (1) se faisant par un protocole compatible avec le protocole WAP, ou un protocole utilisant le langage VoiceXML, ou une variante ou évolution de ces protocoles.

10. Procédé selon l'une des revendications 1 à 9, **caractérisé en ce que** le réseau permet la communication informatique entre le système (2) fournisseur de contenu et le terminal (30 à 35) client en utilisant le réseau (10) internet ou un réseau de type intranet.

11. Procédé selon l'une des revendications 1 à 10, **caractérisé en ce que** les données (203) de contexte émises ou les données (303) de contexte reçues par le système informatique fournisseur de contenu sont organisées selon un format compatible avec les «cookies» définis par le protocole HTTP.

12. Système de gestion de données de contexte, pour un fonctionnement multiterminal et multimode utilisant diverses configurations logicielles permettant la navigation sur au moins un réseau pour accéder à un service d'un fournisseur de contenu, les données de contexte incluant des données représentant des informations, soit spécifiques à une session de fourniture de contenu par communication informatique, à travers au moins un réseau (1) informatique, entre au moins un dispositif de traitement de données numériques, dit terminal (30 à 35) client, et au moins un système (2) informatique fournisseur de contenu, soit spécifiques à un utilisateur dudit au moins un terminal client, soit spécifiques à une combinaison de ces éléments, les données (40) de contexte étant mémorisées en dehors du système (2) informatique fournisseur de contenu et à la demande dudit système (2) fournisseur, le procédé comprenant plusieurs agents logiciel, dits proxy (4) de contexte, exécutés par des moyens de calcul et communiquant avec le réseau (1) informatique, ces proxy (4) de contexte mémorisant ces données (40) de contexte dans des moyens de mémorisation indépendants dudit au moins un terminal client et de la configuration logicielle concernée, **caractérisé en ce qu'**il comprend d'une part un premier proxy (42) de contexte communiquant avec une première passerelle (52) de mode permettant la communication avec ce terminal (33) client selon un premier mode (520) de communication déterminé, et d'autre part un deuxième proxy (43) de contexte communiquant avec ledit terminal client, ce deuxième proxy (43) de contexte communiquant avec ce terminal client soit par le réseau (1, 320) informatique soit par une deuxième passerelle (53) de mode permettant la communication du réseau (1) avec ce terminal client selon un deuxième mode (530) de communication déterminé, la session de fourniture de contenu par communication informatique comprenant une première partie de session, réalisée par une communication selon le premier mode (520) de communication, combinée avec une deuxième partie de session, réalisée par une communication selon le deuxième mode (530) de communication, une mémorisation ou une lecture de données (40) de contexte représentant des informations utilisables par un des proxy (4) de contexte ou par le système (2) informatique fournisseur de contenu étant réalisée pour associer ces deux parties de session.

13. Système selon la revendication 12, **caractérisé en ce qu'**un des proxy (4) de contexte comprend d'une part des moyens de lire et d'analyser des données représentant une réponse (200) du système fournisseur (2) au terminal (30) client au sein d'une telle session et comportant des données (203) de contexte que le système fournisseur demande au terminal client de mémoriser, et d'autre part des moyens d'identifier ce système fournisseur, des moyens d'identifier ce terminal client ou l'utilisateur (3) de ce terminal client, ainsi que des moyens de mémoriser tout ou partie de ces données (203) de contexte en association avec l'identification de ce système fournisseur, ou de ce terminal client, ou de l'utilisateur de ce terminal client.

14. Système selon l'une des revendications 12 à 13, **caractérisé en ce qu'**un des proxy (4) de contexte comprend des moyens de lire et d'analyser des données représentant une requête (300) d'accès du terminal (30) client selon une configuration logicielle donnée au système fournisseur au sein d'une telle session, des moyens d'identifier ce système (2) fournisseur, des moyens (40, 401, 402, 403) d'identifier ce terminal client ou l'utilisateur (3) de ce terminal client, ainsi que des moyens de compléter ou de modifier les données de cette requête d'accès en fonction de données (40) de contexte précédemment mémorisées par lui et en rapport avec ce système fournisseur et ce terminal client ou l'utilisateur de ce terminal client.

15. Système selon la revendication 14, **caractérisé en ce que** les moyens de compléter ou modifier les données de la requête d'accès permettent d'incorporer un identifiant de client ou un identifiant temporaire correspondant à la session en cours.

16. Système selon l'une des revendications 12 à 15, **caractérisé en ce qu'**il comprend des moyens de redirection du terminal client depuis l'adresse ou l'identification par laquelle le terminal client cherche à entrer en communication avec le système fournisseur, vers une adresse conduisant à un des proxy de contexte, ces moyens de redirection permettant à ce proxy de contexte de recevoir en lieu et place du système fournisseur tout ou partie des données (300) envoyées par le terminal client audit système fournisseur de contenu.

17. Système selon l'une des revendications 12 à 16, **caractérisé en que** le système (2) fournisseur de contenu est accessible, depuis le réseau (1) informatique, sous la forme d'un site au standard «world wide web» et communique avec un des proxy (4) de contexte selon le protocole TCP/IP ou HTTP.

18. Système selon l'une des revendications 12 à 17, **caractérisé en ce que** le réseau (1) informatique comprend une ou plusieurs parties utilisant le réseau Internet (10) ou un réseau Intranet pour permettre la communication informatique entre un des proxy (4) de contexte, le terminal (31, 32) client, et le système (2) fournisseur, ou entre deux de ces éléments.

19. Système selon l'une des revendications 12 à 18, **caractérisé en ce qu'**au moins une des passerelles de mode permet la communication entre d'une part le réseau (1) informatique et d'autre part un réseau de téléphonie filaire, ou un réseau de téléphonie cellulaire GSM ou DCS ou GPRS, ou un réseau de communication selon le standard Bluetooth ou le standard Airport ou la norme ISO 802.11 (marques déposées).

20. Système selon l'une des revendications 12 à 19, **caractérisé en ce que** plusieurs des proxy (41, 42, 43) de contexte communiquent entre eux, ou avec le système fournisseur de contenu, ou les deux, à travers le réseau informatique, au moins un de ces proxy de contexte étant intégré à une passerelle assurant la transformation entre plusieurs protocoles de communication ou entre plusieurs modes de transmission.

## Claims

1. Method of managing context data (40), the context data (40) including data representing information which is:
- either specific to a content provision session via computer communication, through at least one computer network (1), between at least one digital data processing device, referred to as a client terminal (30 to 35), and at least one content provider information system (2),
- or specific to a user of the said at least one client terminal,
- or specific to a combination of these elements,
the context data (40) being stored outside the content provider information system (2) and at the request of the said provider system (2), the method being suitable for multi-terminal and multi-mode operation, using various software configurations which enable browsing on at least one network in order to access a content provider service, the method comprising at least one step of storing the said context data (40) by a plurality of computer agents, referred to as context proxies (4), in storage means independent of the said at least one client terminal and of the software configuration concerned which is used, and accessible from at least one information or electronic system managing the computer network (1), the method being **characterised in that** it comprises at least:
- a step of communication where a first context proxy (42) communicates on the one hand with a first mode gateway (52) enabling communication with this client terminal (33) according to a first specified communication mode (520), and on the other hand with a second context proxy (43) which communicates with the said client terminal, this second context proxy agent communicating with this client terminal either via the computer network or via a second mode gateway which enables the network (1) to communicate with this client terminal according to a second specified communication mode, the session of content provision by computer communication comprising a first session part obtained by a communication according to the first communication mode (520), combined with a second session part obtained by a communication according to the second communication mode,
- a step of storing or reading context data (40) representing information which can be used by one of the context proxies (4) or by the content provider computer system (2) in order to combine these two session parts.

2. Method as claimed in Claim 1, **characterised in that** it additionally comprises at least one operation of access by the client terminal (30) according to a given software configuration to the at least one content provider system (2) by sending data representing an access request (300), this access operation comprising the following steps:
- reception (61) by at least one context proxy (4) of data associated with a request (200) for access to the content provider system (2) from the client terminal (30) according to the given software configuration, these data comprising at least a provider identification (301) and a client identification (302);
- testing (62, 63) by the context proxy (4) as to the existence or non-existence of context data (40) stored in storage means independent of the client terminal (30), of the software configuration used and of the provider system (2), these context data (40) corresponding to this provider identification (301) and to this client identification (302);
- reading (64) of these context data (40), and possibly modification (65) of these context data as a function of the information received corresponding to the access request;
- transmission (67) to the content provider system (2) of all or part of the read context data (40) or of a version of the access request (300) modified as a function of the said context data (40).

3. Method as claimed in Claim 1 or Claim 2, **characterised in that** it comprises at least one operation of response by the content provider system (2) to the client terminal (30) by transmission of data representing a response (200), this response operation comprising the following steps:
- reception (71) by at least one context proxy (4) of data associated with a response (200) by the content provider system (2) to the client terminal (30), this response comprising at least one request (203) for storage of context data, these context data having to be stored outside the said content provider system and at its request;
- storage (75) of context data (40) by the context proxy (4) in storage means independent of the client terminal (30) and of the content provider system (2), these context data representing information associated with this response (200) or with the client terminal (3) to (35) or with the user (3) of this client terminal or with the content provider system (2).

4. Method as claimed in Claim 3, **characterised in that** the storage of the context data (40) includes the storage of a client identifier or a session identifier.

5. Method as claimed in Claim 3 or Claim 4, **characterised in that** the response operation from the content provider system (2) to the client terminal (30) additionally includes a step (73) of asking the client terminal for an authorisation to store context data (40).

6. Method as claimed in any one of Claims 1 to 5, **characterised in that** it comprises at least one communication step where one of the context proxies (4) communicates directly or indirectly on the one hand with the content provider system (2) by means of the computer network (1) and on the other hand with the client terminal (33, 34, 35) or with a mode gateway (51, 52, 53) which enables the computer network (1) to communicate with this client terminal according to a specified communication mode (510, 520, 530) which is different from the one used by the computer network.

7. Method as claimed in any one of Claims 1 to 6, **characterised in that** at least one communication step between the content provider computer system (2) and one of the context proxies (4) is carried out by at least one protocol compatible with the TCP/IP protocol or the HTTP protocol.

8. Method as claimed in any one of Claims 1 to 7, **characterised in that** the client terminal comprises a digital terminal (34) or a cellular telephone (33), at least one step of communication between the client terminal and the network (1) being carried out by wireless connection according to the GSM standard, or the DCS standard or the GPRS standard, or the Airport standard, or the Bluetooth standard or the ISO 802.11 standard (trademarks), or a variant or development of these standards.

9. Method as claimed in any one of Claims 1 to 8, **characterised in that** the client terminal comprises a digital terminal (34) or a cellular or wired telephone (35), at least one step of communication between the client terminal and the network (1) being carried out by a protocol compatible with the WAP protocol, or a protocol using the VoiceXML language, or a variant or development of these protocols.

10. Method as claimed in any one of Claims 1 to 9, **characterised in that** the network enables computer communication between the content provider system (2) and the client terminal (30 to 35) by using the Internet network (10) or a network of the Intranet type.

11. Method as claimed in any one of Claims 1 to 10, **characterised in that** the context data transmitted (203) or the context data received (303) by the content provider computer system is organised in a format compatible with the "cookies" defined by the HTTP protocol.

12. System for managing context data, for a multi-terminal and multi-mode operation, using various software configurations enabling browsing on at least one network in order to access a content provider service, the context data including data representing information, either specific to a content provision session by computer communication, through at least one computer network (1), between at least one digital data processing device, referred to as a client terminal (30 to 35), and at least one content provider information system (2), or specific to a user of the said at least one client terminal or specific to a combination of these elements, the context data (40) being stored outside the content provider computer system (2) and at the request of the said provider system (2), the method comprising a plurality of software agents, referred to as context proxies (4), which are executed by calculation means and communicate with the computer network (1), these context proxies (4) storing these context data (40) in storage means independent of the at least one client terminal and of the software configuration concerned, **characterised in that** it comprises on the one hand a first context proxy (42) which communicates with a first mode gateway (52) enabling communication with this client terminal (33) according to a first specified communication mode (520), and on the other hand a second context proxy (43) which communicates with the said client terminal, this second context proxy (43) communicating with this client terminal either via the computer network (1 320) or via a second mode gateway (53) enabling communication between the network (1) and this client terminal according to a second specified communication mode (530), the session of content provision by computer communication comprising a first session part obtained by a communication according to the first communication mode (520), combined with a second session part obtained by a communication according to the second communication mode (530), storage or reading of context data (40) representing information which can be used by one of the context proxies (4) or by the content provider computer system (2) in order to combine these two session parts.

13. System as claimed in Claim 12, **characterised in that** one of the context proxies (4) comprises on the one hand means for reading and analysing data representing a response (200) by the provider system (2) to the client terminal (300) within such a session and including context data (203) which the provider system requests the client terminal to store, and on the other hand means for identifying this provider system, means for identifying this client terminal or the user (3) of this client terminal, as well as means for storing all or part of these context data (203) in association with the identification of this provider system, or of this client terminal, or of the user of this client terminal.

14. System as claimed in any one of Claims 12 to 13, **characterised in that** one of the context proxies (4) comprises means for reading and analysing data representing a request (300) for access by the client terminal (30) according to a given software configuration to the provider system within such a session, means for identifying this provider system (2), means (40, 401, 402, 403) for identifying this client terminal or the user (3) of this client terminal, as well as means for completing or modifying the data of this access request as a function of context data (40) previously stored by it and in keeping with this provider system and this client terminal or the user of this client terminal.

15. System as claimed in Claim 14, **characterised in that** the means for completing or modifying the data of the access request enable the incorporation of a client identifier or a temporary identifier corresponding to the current session.

16. System as claimed in any one of Claims 12 to 15, **characterised in that** it comprises means for redirection of the client terminal from the address or the identification by which the client terminal seeks to enter into communication with the provider system, to an address leading to one of the context proxies, these redirection means enabling this context proxy to receive in place of and instead of the provider system all or part of the data (300) transmitted by the client terminal to the said content provider system.

17. System as claimed in any one of Claims 12 to 16, **characterised in that** the content provider system (2) is accessible from the computer network (1) in the form of a standard "World Wide Web" site and communicates with one of the context proxies (4) in accordance with the TCP/IP or HTTP protocol.

18. System as claimed in any one of Claims 12 to 17, **characterised in that** the computer network (1) comprises one or several parts using the Internet network (10) or an intranet network in order to allow computer communication between one of the context proxies (4), the client terminal (31, 32) and the provider system (2), or between two of these elements.

19. System as claimed in any one of Claims 12 to 18, **characterised in that** at least one of the mode gateways enables communication between on the one hand the computer network (1) and on the other hand a wired telephone network, or a GSM or DCS or GPRS cellular telephone network, or a communication network in accordance with the Bluetooth standard or the Airport standard or the ISO 802.11 standard (trademarks).

20. System as claimed in any one of Claims 12 to 19, **characterised in that** a plurality of context proxies (41, 42, 43) communicate with one another, or with the content provider system, or both, through the computer network, at least one of these context proxies being integrated into a gateway which ensures the conversion between several communication protocols or between several transmission modes.

## Patentansprüche

1. Verfahren zum Verwalten von Kontextdaten (40), wobei die Kontextdaten (40) Daten enthalten, die Informationen repräsentieren, die:
- entweder für eine Sitzung zur Bereitstellung von Inhalt durch Computer-Kommunikation über mindestens ein Computernetzwerk (1) zwischen mindestens einer als Client-Endgerät (30 bis 35) bezeichneten Vorrichtung zur Verarbeitung von digitalen Daten und mindestens einem Inhaltbereitstellüngs-Computersystem (2) spezifisch sind,
- oder die für einen Benutzer des mindestens einen Client-Endgerätes spezifisch sind,
- oder die für eine Kombination dieser Elemente spezifisch sind,
wobei die Kontextdaten (40) außerhalb des Inhaltbereitstellungs-Computersystems (2) und auf Anfrage des Bereitstellungssystems (2) gespeichert werden, wobei das Verfahren für einen Mehrfach-Endgerät- und Mehrfach-Modus-Betrieb geeignet ist, wobei zum Zugreifen auf einen Dienst eines Inhaltsanbieters verschiedene Software-Konfigurationen verwendet werden, die das Navigieren in mindestens einem Netzwerk ermöglichen, wobei das Verfahren mindestens einen Schritt des Speicherns der Kontextdaten (40) durch mehrere als Kontextproxys (4) bezeichnete Computermittler in von dem mindestens einen Client-Endgerät und der betreffenden verwendeten Software-Konfiguration unabhängigen Speichermitteln aufweist, auf die von mindestens einem das Computernetzwerk (1) verwaltenden Computersystem oder elektronischen System zugegriffen werden kann, wobei das Verfahren **dadurch gekennzeichnet ist, dass** es mindestens aufweist:
- einen Kommunikationsschritt, bei dem ein erster Kontextproxy (42) einerseits mit einer ersten Modus-Schnittstelle (52), die die Kommunikation mit dem Client-Endgerät (33) gemäß einem ersten bestimmten Kommunikationsmodus (520) ermöglicht, und andererseits mit einem mit dem Client-Endgerät kommunizierenden zweiten Kontextproxy (43) kommuniziert, wobei der zweite Kontextproxy (43) mit dem Client-Endgerät entweder über das Computernetzwerk (1, 320) oder über eine zweite Modus-Schnittstelle (53) kommuniziert, die die Kommunikation des Netzwerks (1) mit dem Client-Endgerät gemäß einem zweiten bestimmten Kommunikationsmodus (530) ermöglicht, wobei die Sitzung zur Bereitstellung von Inhalt durch Computer-Kommunikation aufweist: einen ersten Sitzungsteil, der durch eine Kommunikation gemäß dem ersten Kommunikationsmodus (520) realisiert wird, kombiniert mit einem zweiten Sitzungsteil, der durch eine Kommunikation gemäß dem zweiten Kommunikationsmodus (530) realisiert wird, und
- einen Schritt des Speicherns oder des Lesens von Kontextdaten (40), die Informationen repräsentieren, die von einem der Kontextproxys (4) oder von dem Inhaltbereitstellungs-Computersystem (2) benutzbar sind, zum Verknüpfen der beiden Sitzungsteile.

2. Verfahren gemäß Anspruch 1, **dadurch gekennzeichnet, dass** es ferner mindestens einen Vorgang des Zugreifens des Client-Endgerätes (30) gemäß einer gegebenen Software-Konfiguration auf das mindestens eine Inhaltbereitstellungssystem (2) mittels des Sendens von eine Zugriffsanfrage (300) repräsentierenden Daten aufweist, wobei der Zugriffsvorgang die folgenden Schritte aufweist:
- Empfangen (61) von mit einer Anfrage für einen Zugriff (200) auf das Inhaltbereitstellungssystem (2) von Seiten des Client-Endgerätes (30) gemäß der gegebenen Software-Konfiguration verknüpften Daten durch mindestens einen der Kontextproxys (4), wobei die Daten mindestens eine Anbieter-Identifikation (301) und eine Client-Identifikation (302) aufweisen,
- Prüfen (62, 63) mittels des Kontextproxys (4) des Vorhandenseins oder des Nichtvorhandenseins von Kontextdaten (40), die in den Speichermitteln gespeichert sind, die von dem Client-Endgerät (30), der verwendeten Software-Konfiguration und dem Anbietersystem (2) unabhängig sind, wobei die Kontextdaten (40) der Anbieter-Identifikation (301) und der Client-Identifikation (302) entsprechen,
- Lesen (64) der Kontextdaten (40) und möglicherweise Modifizieren (65) der Kontextdaten in Abhängigkeit von den empfangenen Informationen, die der Zugriffsanfrage entsprechen,
- Übermitteln (67) von allen oder einem Teil der gelesenen Kontextdaten (40) oder einer in Abhängigkeit von den Kontextdaten (40) modifizierten Version der Zugriffsanfrage (300) an das Inhaltbereitstellungssystem (2).

3. Verfahren gemäß Anspruch 1 oder 2, **dadurch gekennzeichnet, dass** es mindestens einen Antwortvorgang des Inhaltbereitstellungssystems (2) an das Client-Endgerät (30) mittels des Sendens von eine Antwort (200) repräsentierenden Daten aufweist, wobei der Vorgang des Antwortens die folgenden Schritte aufweist:
- Empfangen (71) durch mindestens einen der Kontextproxys (4) von Daten, die mit einer Antwort (200) des Inhaltbereitstellungssystems (2) an das Client-Endgerät (30) verknüpft sind, wobei die Antwort mindestens eine Anfrage (203) zum Speichern von Kontextdaten (40) aufweist, wobei die Kontextdaten außerhalb des Inhaltsbereitstellungssystems und auf dessen Anfrage hin gespeichert werden müssen,
- Speichern (75) von Kontextdaten (40), durch den Kontextproxy (4), in den von dem Client-Endgerät (30) und dem Inhaltbereitstellungssystem (2) unabhängigen Speichermitteln, wobei die Kontextdaten Informationen repräsentieren, die mit dieser Antwort (200) oder mit dem Client-Endgerät (30 bis 35) oder mit dem Benutzer (3) des Client-Endgerätes oder mit dem Inhaltbereitstellungssystem (2) verknüpft sind.

4. Verfahren gemäß Anspruch 3, **dadurch gekennzeichnet, dass** das Speichern der Kontextdaten (40) das Speichern eines Client-Identifizierers oder eines Sitzungs-Identifizierers aufweist.

5. Verfahren gemäß Anspruch 3 oder 4, **dadurch gekennzeichnet, dass** der Vorgang des Antwortens des Inhaltbereitstellungssystems (2) an das Client-Endgerät (30) darüber hinaus einen Schritt (73) des Anforderns einer Autorisierung des Speicherns der Kontextdaten (40) bei dem Client-Endgerät aufweist.

6. Verfahren gemäß einem der Ansprüche 1 bis 5, **dadurch gekennzeichnet, dass** es mindestens einen Kommunikationsschritt aufweist, bei dem einer der Kontextproxys (4) direkt oder indirekt einerseits mit dem Inhaltbereitstellungssystem (2) mittels des Computernetzwerks (1)und andererseits mit dem Client-Endgerät (33, 34, 35) oder mit einer Modus-Schnittstelle (51, 52, 53) kommuniziert, die die Kommunikation des Computernetzwerks (1) mit dem Client-Endgerät gemäß einem bestimmten Kommunikationsmodus (510, 520, 530) ermöglicht, der sich von demjenigen unterscheidet, der von dem Computernetzwerk verwendet wird.

7. Verfahren gemäß einem der Ansprüche 1 bis 6, **dadurch gekennzeichnet, dass** mindestens ein Kommunikationsschritt zwischen dem Inhaltbereitstellungs-Computersystem (2) und einem der Kontextproxys (4) mittels mindestens eines Protokolls erfolgt, das mit dem TCP/IP-Protokoll oder mit dem HTTP-Protokoll kompatibel ist.

8. Verfahren gemäß einem der Ansprüche 1 bis 7, **dadurch gekennzeichnet, dass** das Client-Endgerät ein digitales Endgerät (34) oder ein Mobiltelefon (33) aufweist, wobei mindestens ein Kommunikationsschritt zwischen dem Client-Endgerät und dem Netzwerk (1) mittels Drahtlosverbindung gemäß dem GSM-Standard, oder dem DCS-Standard oder dem GPRS-Standard oder dem AirPort-Standard oder dem Bluetooth-Standard oder der ISO-Norm 802.11 (eingetragene Marken) oder einer Variante oder Entwicklung dieser Standards erfolgt.

9. Verfahren gemäß einem der Ansprüche 1 bis 8, **dadurch gekennzeichnet, dass** das Client-Endgerät ein digitales Endgerät (34) oder ein Mobiltelefon (33) oder ein schnurgebundenes Telefon (35) aufweist, wobei mindestens ein Kommunikationsschritt zwischen dem Client-Endgerät und dem Netzwerk (1) mittels eines mit dem WAP-Protokoll kompatiblen Protokolls oder mittels eines VoiceXML verwendenden Protokolls oder mittels einer Variante oder Entwicklung dieser Protokolle erfolgt.

10. Verfahren gemäß einem der Ansprüche 1 bis 9, **dadurch gekennzeichnet, dass** das Netzwerk die Computer-Kommunikation zwischen dem Inhaltbereitstellungssystem (2) und dem Client-Endgerät (30 bis 35) unter Nutzung des Internet-Netzwerks (10) oder eines Netzwerks des Intranet-Typs ermöglicht.

11. Verfahren gemäß.einem der Ansprüche 1 bis 10, **dadurch gekennzeichnet, dass** die gesendeten Kontextdaten (203) oder die von dem Inhaltbereitstellungssystem empfangenen Kontextdaten (303) gemäß einem Format organisiert sind, das mit den durch das HTTP-Protokoll definierten "Cookies" kompatibel ist.

12. System zum Verwalten von Kontextdaten für einen Mehrfach-Endgerät- und Mehrfach-Modus-Betrieb mittels unterschiedlicher Software-Konfigurationen, die zum Zugreifen auf einen Dienst eines Inhaltsanbieters das Navigieren in mindestens einem Netzwerk ermöglichen, wobei die Kontextdaten Daten aufweisen, die Informationen repräsentieren, die entweder für eine Sitzung zur Bereitstellung von Inhalt durch Computer-Kommunikation über mindestens ein Computernetzwerk (1) zwischen mindestens einer als Client-Endgerät (30 bis 35) bezeichneten Vorrichtung zur Verarbeitung von digitalen Daten und mindestens einem Inhaltbereitstellungs-Computersystem (2) spezifisch sind, oder die für einen Benutzer des mindestens einen Client-Endgerätes spezifisch sind, oder die für eine Kombination dieser Elemente spezifisch sind, wobei die Kontextdaten (40) außerhalb des Inhaltbereitstellungs-Computersystems (2) und auf Anfrage des Bereitstellungssystems (2) gespeichert werden, wobei das Verfahren mehrere als Kontext-Proxys (4) bezeichnete Software-Mittel aufweist, die von Rechenmitteln ausgeführt werden und mit dem Computernetzwerk (1) kommunizieren, wobei die Kontextproxys (4) die Kontextdaten (40) in Speichermitteln speichern, die von dem mindestens einen Client-Endgerät und von der betreffenden Software-Konfiguration unabhängig sind, **dadurch gekennzeichnet, dass** es aufweist: einerseits einen ersten Kontextproxy (42), der mit einer ersten Modus-Schnittstelle (52) kommuniziert, die die Kommunikation mit dem Client-Endgerät (33) gemäß einem ersten bestimmten Kommunikationsmodus (520) ermöglicht, und andererseits einen zweiten Kontextproxy (43), der mit dem Client-Endgerät kommuniziert, wobei der zweite Kontextproxy (43) mit dem Client-Endgerät entweder über das Computernetzwerk (1, 320) oder über eine zweite Modus-Schnittstelle (53) kommuniziert, die die Kommunikation des Netzwerks (1) mit dem Client-Endgerät gemäß einem zweiten bestimmten Kommunikationsmodus (530) ermöglicht, wobei die Sitzung zur Bereitstellung von Inhalt mittels Computer-Kommunikation aufweist: einen ersten Sitzungsteil, der durch eine Kommunikation gemäß dem ersten Kommunikationsmodus (520) realisiert wird, kombiniert mit einem zweiten Sitzungsteil, der durch eine Kommunikation gemäß dem zweiten Kommunikationsmodus (530) realisiert wird, wobei ein Speichern oder ein Lesen von Kontextdaten (40), die Informationen repräsentieren, die von einem der Kontextproxys (4) oder von dem Inhaltbereitstellungs-Computersystem (2) nutzbar sind, zum Verknüpfen der beiden Sitzungsteile durchgeführt wird.

13. System gemäß Anspruch 12, **dadurch gekennzeichnet, dass** einer der Kontextproxys (4) aufweist: einerseits Mittel zum Lesen und zum Analysieren der Daten, die eine Antwort (200) des Bereitstellungssystems (2) an das Client-Endgerät (30) innerhalb einer derartigen Sitzung darstellen und Kontextdaten (203) aufweisen, für die das Bereitstellungssystem beim Client-Endgerät ein Speichern anfordert, und andererseits Mittel zum Identifizieren des Bereitstellungssystems, Mittel zum Identifizieren des Client-Endgerätes oder des Benutzers (3) des Client-Endgerätes, sowie Mittel zum Speichern aller oder eines Teils der Kontextdaten (203) in Verbindung mit der Identifizierung des Bereitstellungssystems oder des Client-Endgerätes oder des Benutzers des Client-Endgerätes.

14. System gemäß einem der Ansprüche 12 bis 13, **dadurch gekennzeichnet, dass** einer der Kontextproxys (4) aufweist: Mittel zum Lesen und zum Analysieren der Daten, die eine Zugriffsanfrage (300) des Client-Endgerätes (30) gemäß einer gegebenen Software-Konfiguration auf das Bereitstellungssystem innerhalb einer derartigen Sitzung repräsentieren, Mittel zum Identifizieren des Bereitstellungssystems (2), Mittel (40, 401, 402, 403) zum Identifizieren des Client-Endgerätes oder des Benutzers (3) des Client-Endgerätes, sowie Mittel zum Vervollständigen oder Modifizieren der Daten der Zugriffsanfrage in Abhängigkeit von zuvor von diesem gespeicherten Kontextdaten (40), die im Zusammenhang mit dem Bereitstellungssystem und dem Client-Endgerät oder dem Benutzer des Client-Endgerätes stehen.

15. System gemäß Anspruch 14, **dadurch gekennzeichnet, dass** die Mittel zum Vervollständigen oder Modifizieren der Daten der Zugriffsanfrage das Einbeziehen eines Client-Identifizierers oder eines temporären Identifizierers ermöglichen, der der laufenden Sitzung entspricht.

16. System gemäß einem der Ansprüche 12 bis 15, **dadurch gekennzeichnet, dass** es Mittel aufweist zum Umleiten des Client-Endgerätes von der Adresse oder der Identifizierung, durch die das Client-Endgerät versucht, mit dem Bereitstellungssystem in Verbindung zu gelangen, in Richtung zu einer Adresse, die zu einem der Kontextproxys führt, wobei die Umleitungsmittel dem Kontextproxy ermöglichen, anstelle des Bereitstellungssystems alle oder einen Teil der von dem Client-Endgerät an das Inhaltbereitstellungssystem gesendeten Daten (300) zu empfangen.

17. System gemäß einem der Ansprüche 12 bis 16, **dadurch gekennzeichnet, dass** das Inhaltbereitstellungssystem (2) in Form einer Seite im "World-Wide-Web"-Standard von dem Computernetzwerk (1) aus zugänglich ist und dass es gemäß dem TCP/IP-Protokoll oder dem HTTP-Protokoll mit einem der Kontextproxys (4) kommuniziert.

18. System gemäß einem der Ansprüche 12 bis 17, **dadurch gekennzeichnet, dass** das Computernetzwerk (1) einen oder mehr Teile aufweist, die zum Ermöglichen der Computer-Kommunikation zwischen einem von den Kontextproxys (4), dem Client-Endgerät (31, 32) und dem Bereitstellungssystem (2) oder zwischen zweien dieser Elemente das Internet-Netzwerk (10) oder ein Intranet-Netzwerk nutzen.

19. System gemäß einem der Ansprüche 12 bis 18, **dadurch gekennzeichnet, dass** mindestens eine der Modus-Schnittstellen die Kommunikation zwischen einerseits dem Computernetzwerk (1) und andererseits einem Festnetz-Telefonie-Netzwerk oder einem GSM- oder DCS- oder GPRS-Mobiltelefonie-Netzwerk oder einem Kommunikationsnetzwerk gemäß dem Bluetooth-Standard oder dem AirPort-Standard oder der ISO-Norm 802-11 (eingetragene Marken) ermöglicht.

20. System gemäß einem der Ansprüche 12 bis 19, **dadurch gekennzeichnet, dass** mehrere der Kontextproxys (41, 42, 43) miteinander oder mit dem Inhaltbereitstellungssystem oder mit beiden über das Computernetzwerk kommunizieren, wobei mindestens einer der Kontextproxys in eine Schnittstelle integriert ist, die die Umwandlung zwischen mehreren Kommunikationsprotokollen oder zwischen mehreren Sendemodi sicherstellt.
